# EUROPEAN PATENT APPLICATION

(11) **EP 3 588 451 A1**
(43) Date of publication of application: **01.01.2020**
(21) Application number: 18179834.9
(22) Date of filing: 26.06.2018
(51) Int. Cl.: G07C 5/00, G07C 5/08

(54) **REPAIR INSTRUCTION DEVICE AND METHOD**

(71) Applicant: Ningbo Geely Automobile Research & Development Co. Ltd., Hangzhou Bay New District Ningbo 315336 (CN)
(72) Inventor: MOHIDEEN, Arez, 417 66 GÖTEBORG (SE)
(74) Representative: Zacco Sweden AB

(57) **Abstract**

A first electronic device, a server and a method for assisting a user (1) getting a vehicle repaired, the method comprising: (S1) identifying an object (10a, 10b, 10c) associated with the repairing of the vehicle by determining a local proximity identification information attached to the object (10a, 10b, 10c); (S2) determining geographical position data of the first electronic device (40a), (S3) transmitting, from the first electronic device (40a) to a server (50) a first signal, wherein the first signal is indicative of the identification information attached to the object (10a, 10b, 10c) and geographical position data of the first electronic device (40a); and in response to transmitting, (S5) receiving from the server (50), a second signal, wherein the second signal is indicative of repair instruction data for provision to the user (1) via at least a first user interface (400a) of the first electronic device (40a).

## Description

### TECHNICAL FIELD

The disclosure pertains to the field of assisting a user getting a vehicle repaired by using an electronic device in connection to a server.

### BACKGROUND

A user of a vehicle will sooner or later experience a situation when the vehicle needs to be repaired. A vehicle can break and be in a need of immediate repair before the user can continue to use the vehicle. Sometimes the vehicle can be driven to a location that is close to the location where the vehicle broke down in order to get help with repairing the vehicle. It is also sometimes possible for a user to repair the vehicle themselves at the place where the vehicle broke down. Most vehicles have an instruction book with an index that can be used by the user in order to find a way to repair the vehicle. Today it is also common with electronic manuals or electronic instruction books, that is more or less just an electronic copy of the printed manual or instruction book but sometimes with a smarter index and search function. The user can sometimes repair the vehicle themselves if they can easily follow the instructions in the manual or instruction book. An example of a situation when a vehicle is in a need for repair is when the vehicle gets a flat tire, i.e. a deflated tire. Most vehicles are equipped with a repair kit for repairing flat tires. An example of such repair kit is a compressor and a sealant bottle. This kind of repair kit is used for temporarily repairing the deflated tire at the location where the vehicle got the flat tire. However, this kind of repair kits are not always preferred since the users does not always know how to operate the compressor and the sealant bottle. If the users cannot repair the vehicle themselves, then they need assistance from a third party, e.g. to get in contact with a local service station that can help repairing the vehicle. Even when a user can repair the vehicle it is often a temporary repair, e.g. temporary repairing a flat tire, and there is often a need to visit a service station and get the vehicle fully repaired, e.g. shift a tire, before the vehicle is fully operable again. Often the user has to find service stations in the area by first understand the current geographical position of the vehicle and then search the internet or reading in the vehicle manual to find service stations that are nearby. Sometimes the user has to call a number of service stations in order to get in contact and book a time for service at a certain service station that can help repairing the vehicle. This is sometimes cumbersome and inefficient, and takes time.

### SUMMARY

Today there is a demand for a better solution that enhances the experience for vehicle users when the vehicle needs to be repaired. Current solutions with repair kits and manuals seems not always be the best way to help the user of the vehicle in those situations. A user may have difficulties understanding how e.g. a repair kit works, and the user is not always able to find the correct instructions in the manual, or even finding the manual itself. If the user cannot repair the vehicle, it can also be difficult for a user to know what service station they can contact, where it is located and if they have capacity or possibility to attend to the repair needed. In the case the user can temporarily repair the vehicle, there is often a need for the vehicle to get fully repaired at a service station. Finding a service station and book a time for the repairing of the vehicle can be cumbersome and sometimes difficult for the user. In the case the user is travelling in an area that is not familiar to the user, it can even be difficult for the user to understand the current geographical location of the vehicle and finding relevant service stations that have timeslots available for repairing the vehicle that are not too far away.

The disclosure proposes a first electronic device for assisting a user getting a vehicle repaired. The first electronic device comprises a processing circuitry and a local proximity identification information reader. The processing circuitry is configured to cause the first electronic device to identify an object associated with the repairing of the vehicle by determining a local proximity identification information attached to the object using the local proximity identification information reader. The processing circuitry is further configured to cause the first electronic device to transmit, to server, a first signal, wherein the first signal is indicative of the identification information attached to the object and receive, from the server, a second signal, wherein the second signal is indicative of repair instruction data for provision to the user via at least a first user interface of the first electronic device and/or a second user interface of a second electronic device. An advantage with the first electronic device, e.g. a smartphone, is that the user only needs to be in the proximity of the object, e.g. a repair kit or a tire, in order to get repair instruction data displayed on the first electronic device and/or the second electronic device, e.g. an infotainment head unit.

According to an aspect the processing circuitry is further configured to cause the first electronic device to determine geographical position data of the first electronic device, for determining the location of the user and the vehicle. In other words, since the first electronic device is in the proximity of the object and the vehicle, then the geographical position of the vehicle is also determined.

According to an aspect the first signal is further an indicative of the geographical position data of the first electronic device. This means that the geographical position data of the first electronic device is also transmitted to the server.

According to an aspect the repair instruction data comprising an instruction video for provision of information relating to the object associated with the repairing of the vehicle to the user via at least a first user interface of the first electronic device or a second user interface of the second electronic device. In other words an instruction video relating to the object, e.g. how to use the repair kit for repairing a flat tire, can be viewed on the first electronic device, e.g. the users smartphone, and/or the second electronic device, e.g. the infotainment head unit in the vehicle.

According to an aspect the repair instruction data comprising a suggested time slot at a service station for repairing the vehicle and/or directions to the location of the suggested service station. This means that the user can review a suggested time for getting the vehicle repaired, and/or get directions to the service station to see where the service station is located.

According to an aspect the repair instruction data comprising directions to the location of the suggested service station based on at least the geographical data of the first electronic device or the object associated with the repairing of the vehicle. An advantage with this is that directions to the nearest service station can be provided in relation to the current position of the vehicle or that the service station is capable of assisting with the particular repair, e.g. that the service station can repair a tire or not for example.

According to an aspect the object is a repair kit for repairing a flat tire.

According to an aspect the local proximity identification information reader comprises at least one of a camera for determining the local proximity identification information by capturing an image of a Quick Response code or a radio for determining the local proximity identification information via Radio Frequency Identification technology or Near Field Communication technology. An advantage with using a camera is that the object needs to be in the proximity, i.e. in the field of view of the camera. An advantage with using a Radio Frequency Identification technology or Near Field Communication technology is that the object needs to be in the proximity, i.e. if the radio coverage of Radio Frequency Identification technology or Near Field Communication technology.

The disclosure further proposes a server for assisting a user getting a vehicle repaired. The server comprises a processing circuitry. The processing circuitry is configured to cause server to receive, from a first electronic device, a first signal, wherein the first signal is indicative of at least one of an identification information attached to an object associated with the repairing of the vehicle or the geographical position data of the first electronic device. The processing circuitry is further configured to cause server to determine, based on the received first signal, a repair instruction data and transmit, to the first electronic device, a second signal, wherein the second signal is indicative of repair instruction data for provision to the user via at least a first user interface of the first electronic device and/or a second user interface of a second electronic device. In other words, the server can provide the first or second electronic device with instruction data for assisting the user to repair the vehicle.

According to an aspect the processing circuitry is further configured to cause the server to store a first repair data based on the identification of the object associated with the repairing of the vehicle. In other words, the server can store data relating to usage of the object at a certain time.

The disclosure further proposes a method for assisting a user getting a vehicle repaired. The method comprising identifying, by a first electronic device, an object associated with the repairing of the vehicle by determining a local proximity identification information attached to the object and transmitting, from the first electronic device to a server a first signal, wherein the first signal is indicative of the identification information attached to the object. The method then further comprising, in response to transmitting, receiving at the first electronic device from the server, a second signal, wherein the second signal is indicative of repair instruction data for provision to the user via at least a first user interface of the first electronic device and/or a second user interface of a second electronic device. An advantage with the first electronic device, e.g. a smartphone, is that the user only needs to be in the proximity of the object, e.g. a repair kit or a tire, in order to get repair instruction data displayed on the first electronic device and/or the second electronic device, e.g. an infotainment head unit.

According to an aspect the method further comprising determining by the first electronic device, geographical position data of the first electronic device, for determining the location of the user and the vehicle. In other words, since the first electronic device is in the proximity of the object and the vehicle, then the geographical position of the vehicle is also determined.

According to an aspect the method further comprising in response to receiving the first signal at the server, storing a first repair data based on the identification of the object associated with the repairing of the vehicle at the server. In other words, the server can store data relating to usage of the object at a certain time.

According to an aspect the first signal is further an indicative of the geographical position data of the first electronic device. This means that the geographical position data of the first electronic device is also transmitted to the server.

According to an aspect the repair instruction data comprising an instruction video for provision of information relating to the object associated with the repairing of the vehicle for provision to the user via at least a first user interface of the first electronic device or a second user interface of a second electronic device. In other words an instruction video relating to the object, e.g. how to use the repair kit for repairing a flat tire, can be viewed on the first electronic device, e.g. the users smartphone, and/or the second electronic device, e.g. the infotainment head unit in the vehicle.

According to an aspect the repair instruction data comprising a suggested time at a service station for repairing the vehicle and/or directions to the location of the suggested service station for provision to the user via at least a first user interface of the first electronic device or a second user interface of a second electronic device. This means that the user can review a suggested time for getting the vehicle repaired, and/or get directions to the service station to see where the service station is located. According to an aspect the object is a repair kit for repairing a flat tire.

The disclosure further proposes a computer program product comprising a non-transitory computer readable medium, having thereon a computer program comprising program instructions, the computer program being loadable into a processing circuitry and configured to cause execution of the method when the computer program is run by the processing circuitry.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 illustrates an example overview of the first and second electronic devices and the server.
Figure 2a illustrates an example of the first electronic device wherein the local proximity identification information reader comprises a camera.
Figure 2b illustrates an example of the first electronic device wherein the local proximity identification information reader comprises a radio.
Figure 3 illustrates an example overview of the communication interfaces between the first and second electronic devices and the server.
Figure 4 illustrates a flow chart of the method steps according to the disclosure.

### DETAILED DESCRIPTION

Aspects of the present disclosure will be described more fully hereinafter with reference to the accompanying drawings. The method, server and electronic devices disclosed herein can, however, be realized in many different forms and should not be construed as being limited to the aspects set forth herein. Like numbers in the drawings refer to like elements throughout. The terminology used herein is for the purpose of describing particular aspects of the disclosure only, and is not intended to limit the disclosure.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

Today there is a demand for a better solution that enhances the experience for vehicle users when the vehicle needs to be repaired. Current solutions with repair kits and manuals seems not always be the best way to help the user of the vehicle in those situations. A user may have difficulties understanding how e.g. a repair kit works, and the user is not always able to find the correct instructions in the manual, or even finding the manual itself. Today it is also difficult to understand when and where a repair kit in a vehicle has been used, or if not used at all. If the user cannot repair the vehicle it can also be difficult for a user to know what service station they can contact, where it is located and if they have capacity or possibility to attend to the repair needed.

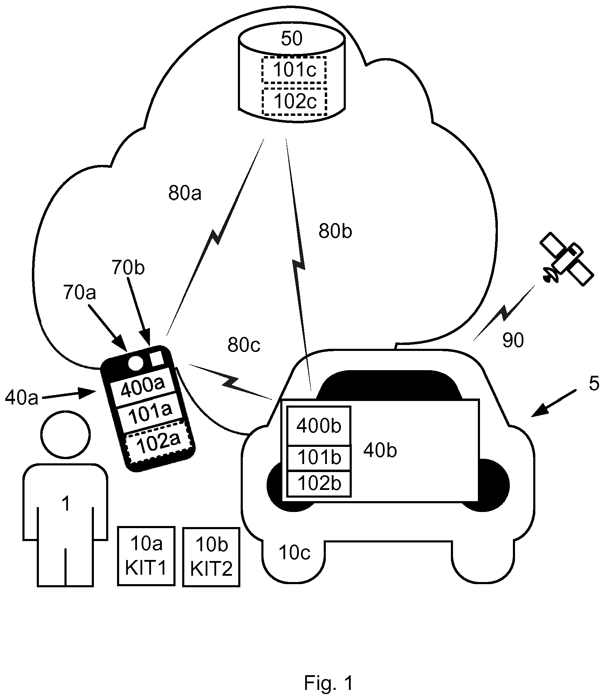

The disclosure proposes a first electronic device 40a for assisting a user 1 getting a vehicle repaired. According to an aspect the first communication device 40a is a portable electronic device 40a, as illustrated in Fig 1. In one example, the first communication device 40a is a smartphone or a tablet. The first electronic device 40a comprises a processing circuitry 101a. According to an aspect the first first electronic device 40a further comprises a user interface 400a. According to an aspect the user interface 400a is configured for output of information to the user 1 of the vehicle. According to an aspect the user interface 400a is configured for input of information from the user 1 of the vehicle. According to an aspect the user interface 400a is any of a touch sensitive display, display combined with a keyboard or a voice controlled user interface. According to an aspect the first first electronic device 40a further comprises a memory 102a. The first electronic device 40a further comprises a local proximity identification information reader 70a, 70b.

The processing circuitry 101a is configured to cause the first electronic device 40a to identify an object 10a, 10b, 10c associated with the repairing of the vehicle 5 by determining a local proximity identification information attached to the object 10a, 10b, 10c using the local proximity identification information reader 70a, 70b, Illustrated in Fig 1. In one the object is a vehicle repair kit illustrated Fig 1 as "KIT1" 10a and "KIT2" 10b. The object can also be a part of the vehicle that is in need of repair, such as a wheel 10c as illustrated in Fig 1. In one example the object is a jackscrew, a tow bar, a hardtop, a tow hook, a spare wheel etc. According to an aspect the object 10a, 10b, 10c is a repair kit for repairing a flat tire.

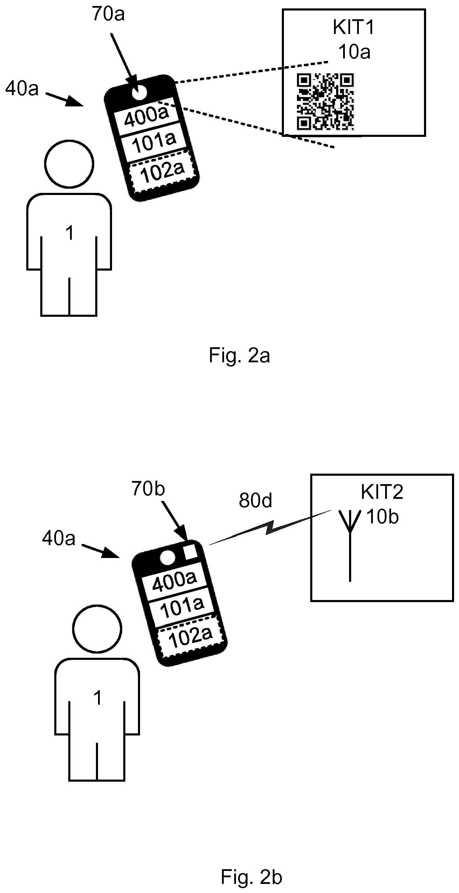

According to an aspect the local proximity identification information reader 70a, 70b comprises at least one of a camera 70a, as illustrated in Fig 2a, for determining the local proximity identification information by capturing an image of a Quick Response code or a radio 70b for determining the local proximity identification information via Radio Frequency Identification technology or Near Field Communication technology. An advantage with using a camera 70a is that the object with the Quick Response code, comprising the local proximity identification information, needs to be in the proximity, i.e. in the field of view of the camera 70a. According to an aspect the user 1 of the first electronic device 40a captures an image of the Quick Response code using the camera 70a.

An advantage with using a radio 70b, and in particular using Radio Frequency Identification technology or Near Field Communication technology, is that the object needs to be in the proximity, i.e. in the radio coverage of Radio Frequency Identification technology or Near Field Communication technology. Radio Frequency Identification technology and Near Field Communication technology uses radio, i.e. electromagnetic fields, to identify so called Radio Frequency Identification tags or Near Field Communication tags that are attached to object. The radio coverage of Radio Frequency Identification technology is typically in the range of meters. The radio coverage of Near Field Communication technology is typically 1 to 10 centimeters. The Radio Frequency Identification tag or the Near Field Communication tag contains the local proximity identification information. According to an aspect the Radio Frequency Identification tag or the Near Field Communication tag must be in the proximity of the local proximity identification information reader 70b in order for the proximity identification information reader 70b to determine the local proximity identification information.

According to an aspect the local proximity identification information reader comprises a camera for capturing an image of the object 10a, 10b, 10c and the processing circuitry 101a is further configured to cause the first electronic device 40a to identify the object 10a, 10b, 10c associated with the repairing of the vehicle by image recognition. In other words, the captured image is used for determining what the object 10a, 10b, 10c associated with the repairing of the vehicle is, e.g. identifying the object 10a, 10b, 10c as a repair kit for repairing a flat tire.

In one example the first electronic device 40a automatically, using the local proximity identification information reader 70a, 70b, reads local proximity identification information attached to objects in the proximity of the first electronic device 40a and alerts the user 1 of the first electronic device 40a if the local proximity identification information reader 70a, 70b identifies any object 10a, 10b, 10c associated with the repairing of the vehicle. According to an aspect the local proximity identification reader 70a, 70b notifies the user 1 via the user interface 400a of the first electronic device 40a that an object 10a, 10b, 10c has been detected by the local proximity identification information reader 70a, 70b. In one example the user 1 is prompted to open an application that is running on the smartphone on order to proceed.

According to an aspect the local proximity identification information is determined by capturing an image of a Quick Response code that is attached to the object 10a, 10b, 10c. This is illustrated in Fig 2a. The object, in the example the repair kit "KIT1" 10a has the Quick Response code attached on the outside of the repair kit, visible for the user 1. The user 1 aims with the camera 70a and captures an image of the Quick Response code via the user interface 400a of the first electronic device 40a.

According to an aspect the local proximity identification information is determined by reading a Radio Frequency Identification tag or a Near Field Communication tag that is attached to the object 10a, 10b, 10c. This is illustrated in Fig 2b. The object, in the example the repair kit "KIT2" 10a has the Radio Frequency Identification tag or a Near Field Communication tag attached to the repair kit, necessary not visible to the user 1. The Radio Frequency Identification tag or a Near Field Communication tag can be attached on the inside or on the outside of the repair kit "KIT2" 10a. In the illustration of Fig 2b the Radio Frequency Identification tag or the Near Field Communication tag is illustrated with an antenna. According to an aspect the local proximity identification information is a code such as combination of letters and numbers. According to an aspect the local proximity identification information is a computer readable code.

The processing circuitry 101a is further configured to cause the first electronic device 40a to transmit, to server 50, a first signal, wherein the first signal is indicative of the identification information attached to the object 10a, 10b, 10c. According to an aspect the server 50 comprising a processing circuitry 101c. According to an aspect the server 50 further comprising a memory 102c. According to an aspect, the first electronic device 40a is configured to communicate with the server 50 via a via a communication network 80a, 80b, 80c as illustrated in Fig 1. In one example the communication network 80a, 80b, 80c is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network. According to an aspect the communication network 80a, 80b, 80c is a standardized wireless local area network such as a Wireless Local Area Network, WLAN, Bluetooth™, ZigBee, Ultra-Wideband, Near Field Communication, NFC, Radio Frequency Identification, RFID, or similar network. The communication network 80a, 80b, 80c can also be a combination of both a local area network and a wide area network.

According to an aspect the first electronic device 40a is further configured to communicate with a second electronic device 40b via the communication network 80a, 80b, 80c.

According to an aspect, the second electronic device 40b is installed in the vehicle. According to an aspect the second electronic device 40b comprises a processing circuitry 101b. According to an aspect the second first electronic device 40b further comprises a user interface 400b. According to an aspect the user interface 400b is configured for output of information to the user 1 of the vehicle 5. According to an aspect the user interface 400b is configured for input of information from the user 1 of the vehicle 5. According to an aspect the user interface 400b is any of a touch sensitive display, display combined with a keyboard or a voice controlled user interface. According to an aspect the second electronic device 40b further comprises a memory 102b. According to an aspect second electronic device 40b is configured to communicate with the first electronic device 40a and/or the server 50 via the communication network 80a, 80b, 80c. According to an aspect, the second electronic device 40b is a central electric module installed in the vehicle 5. According to an aspect the second electronic device 40b comprising at least one of a telematics module, central electric module or a infotainment head unit. In one example the user interface 400b of the second electronic device 40b is a central stack display on the infotainment head unit of the vehicle 5.

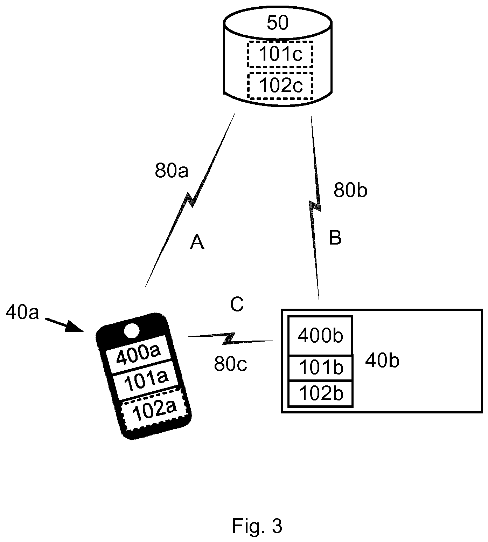

As illustrated in Fig 3, the first electronic device 40a, the second electronic device 40b and the server 50 have plural communication interfaces to the communication network 80a, 80b, 80c illustrated as "A", "B" and "C" in the Fig 3. According to an aspect the first electronic device 40a is configured to communicate directly with the server 50 via the "A" communication interface of the communication network 80a. Typically the "A" communication interface is a standardized wireless wide area network. The first electronic device 40a is further configured to communicate with the server 50 via the second electronic device 40b via the "C" and the "B" communication interfaces of the communication network 80b, 80c. According to an aspect the "C" communication interface is a standardized wireless local area network. According to an aspect the second electronic device 40b is configured to communicate directly with the server 50 via the "B" communication interface of the communication network 80b. Typically the "B" communication interface is a standardized wireless wide area network. Hence, according to an aspect, the first electronic device 40a is configured to transmit the first signal to the server 50 via the second electronic device 40b.

The processing circuitry 101a is further configured to cause the first electronic device 40a to receive, from the server 50, a second signal, wherein the second signal is indicative of repair instruction data for provision to the user 1 via at least a first user interface 400a of the first electronic device 40a and/or the second user interface 400b of the second electronic device 40b. According to an aspect, the first electronic device 40a is configured to receive the second signal from the server 50 via the second electronic device 40b and/or directly from the server 50. According to an aspect both the first electronic device 40a and the second electronic device 40b are configured to each receive the second signal directly from the server 50. According to an aspect the second signal is sent to both the first electronic device 40a and the second electronic device 40b. According to an aspect the first electronic device 40a is configured to receive, from the server 50, the second signal, and to forward the second signal to the second electronic device 40b via the via the "C" communication interface of the communication network 80c, as illustrated in Fig 3.

An advantage with the first electronic device 40a, e.g. a smartphone, is that the user 1 can be in the proximity of the object 10a, 10b, 10c, e.g. a repair kit or a tire, and get repair instruction data displayed on a first user interface 400a of the first electronic device. The repair instruction data can also be displayed the second user interface 400b of the second electronic device 40b, e.g. an infotainment head unit. This will help the user 1 to get support with how to use the repair kit in order to repair the vehicle and continue the journey.

According to an aspect the repair instruction data comprising an instruction video for provision of information relating to the object 10a, 10b, 10c associated with the repairing of the vehicle to the user 1 via at least a first user interface 400a of the first electronic device 40a and/or a second user interface 400b of the second electronic device 40b. In other words an instruction video, with or without sound, relating to the object, e.g. how to use the repair kit for repairing a flat tire, can be viewed on the first electronic device, e.g. the users smartphone, and/or the second electronic device, e.g. the infotainment head unit in the vehicle. According to an aspect the user 1 is able to pause, playback and replay instruction video. In one example the instruction video is a virtual reality video that is played back via the first user interface 400a of the first electronic device 40a while using the camera of the first electronic device 40a to capture an image of the real object 10a, 10b, 10c that is in the proximity of the first electronic device 40a. According to an aspect the instruction video is an interactive video and the processing circuitry 101a is further configured to cause the first electronic device 40a to receive input of the user 1 via the first user interface 400a of the first electronic device 40a for manipulating the instruction video. According to an aspect the repair instruction data comprising text data, such as an instruction manual how to use a repair kit. According to an aspect the repair instruction data comprising image data, such as illustrative images how to use a repair kit.

According to an aspect the processing circuitry 101a is further configured to cause the first electronic device 40a to determine geographical position data of the first electronic device 40a, for determining the location of the user and the vehicle. According to an aspect the first electronic device 40a is configured to receive a Global Positioning System signal 90, via a built in Global Positioning System receiver in the first electronic device 40a or via a Global Positioning System receiver in the second electronic device 40b as illustrated in Fig 1, for determining the geographical position data. According to an aspect the geographical position data is determined by any positioning standard such as Global Positioning System, Glonass, Compass Navigation Satellite System, Beidou-2, Beidou-1 or Galileo". In other words, since the first electronic device 40a is in the proximity of the object and the vehicle, then the geographical position of the vehicle 5 is also determined.

According to an aspect the first signal is further an indicative of the geographical position data of the first electronic device 40a. In other words, according to an aspect the processing circuitry 101a is further configured to cause the first electronic device 40a to transmit, to server 50, a first signal, wherein the first signal is indicative of the identification information attached to the object 10a, 10b, 10c and an indicative of the geographical position data of the first electronic device 40a. Hence, in one example the geographical position data is also included in the first signal and transmitted to the server 50.

According to an aspect the memory 102c of the server 50 comprises a number of service stations, each associated with geographical position data. According to an aspect the memory 102c of the server 50 comprising data relating to a number of service stations, each associated with different type of services that can be provided for repairing a vehicle. According to an aspect the memory 102c of the server 50 comprising data relating to service booking information with vacant time slots available for each service station. Together with the geographical position data, the data relating to services that can be provided, and vacant time slots available for each service station, the user 1 of the vehicle can be informed how, when and where a service station can assist the user 1 that is in need of help.

According to an aspect the repair instruction data comprising a suggested time slot at a service station for repairing the vehicle and/or directions to the location of the suggested service station. This means that the user can review a suggested time for getting the vehicle repaired, and/or get directions to the service station to see where the service station is located. According to an aspect the repair instruction data comprising a plurality of different suggested time slots at one or more service stations for repairing the vehicle and/or directions to the location of the suggested service station. In one example the suggested service stations are visualized on a map at different distances from the vehicle that is displayed on any of the first or second user interfaces (400a, 400b) of any of the first or second electronic devices (40a, 40b). In an example the user can input a selection of a suggested time slot and service station via any of the first or second user interfaces (400a, 400b) of any of the first or second electronic devices (40a, 40b). Hence, in this way the user does not need to search for service stations and make calls, send e-mails etc. to each service station in order to find an available time slot for repairing the vehicle. Instead the user can with comfort accept suggested alternatives that are presented via any of the first or second user interfaces (400a, 400b) of any of the first or second electronic devices (40a, 40b) which makes the whole experience relating to the repairing of the vehicle much more enjoyable and convenient for the user.

According to an aspect the repair instruction data comprising directions to the location of the suggested service station based on at least the geographical data of the first electronic device 40a or the object 10a, 10b, 10c associated with the repairing of the vehicle. In other words depending on the object 10a, 10b, 10c associated with the repairing of the vehicle, different service stations may have different possibilities to offer service relating to the particular repair, e.g. repairing a flat tire. Directions to the nearest service station can be provided in relation to the current position of the vehicle and/or dependent on what particular repair the service station is capable of assisting with, e.g. that the service station can repair a tire or not for example.

The disclosure further proposes a server 50 for assisting a user 1 getting a vehicle repaired. The server 50 comprises a processing circuitry 101c. The processing circuitry 101c is configured to cause server 50 to receive, from a first electronic device 40a, a first signal, wherein the first signal is indicative of an identification information attached to an object 10a, 10b, 10c associated with the repairing of the vehicle and geographical position data of the first electronic device 40a. The processing circuitry 101c is further configured to cause server 50 to determine, based on the received first signal, a repair instruction data and transmit, to the first electronic device 40a, a second signal, wherein the second signal is indicative of repair instruction data for provision to the user 1 via at least a first user interface 400a of the first electronic device 40a and/or a second user interface 400b of a second electronic device 40b. In other words, the server can provide the first or second electronic device with the instruction data for assisting the user to repair the vehicle. According to an aspect, determining the repair instruction data is based on the identification attached to an object 10a, 10b, 10c associated with the repairing of the vehicle. According to an aspect the identification information attached to an object 10a, 10b, 10c comprising vehicle specification data e.g. tire size, rim data, model type etc.According to an aspect the processing circuitry 101c is further configured to cause the server 50 to store a first repair data based on the identification of the object 10a, 10b, 10c associated with the repairing of the vehicle. In other words the server 50 can store data relating to usage of the object 10a, 10b, 10c at a certain time and at a certain location since according to an aspect the first signal is indicative of the identification information attached to an object 10a, 10b, 10c associated with the repairing of the vehicle and the geographical position data of the first electronic device 40a. Hence, according to an aspect the indicative of the identification information attached to the object 10a, 10b, 10c and the indicative of the geographical position data is stored as a first repair data in the memory 102c of the server 50. In one example the identification information attached to the object 10a, 10b, 10c is associate with repairing a flat tire. In one example the server 50 automatically notifies government and authorities about the first repair data to e.g. alert about a need to repair a road to avoid further flat tires or to warn other vehicle users in the area. In one example statistics of the usage of the object 10a, 10b, 10c associated with the repairing of the vehicle is used for developing the object 10a, 10b, 10c, e.g. a repair kit, and/or the instruction video in order to assist vehicle users in a better way.

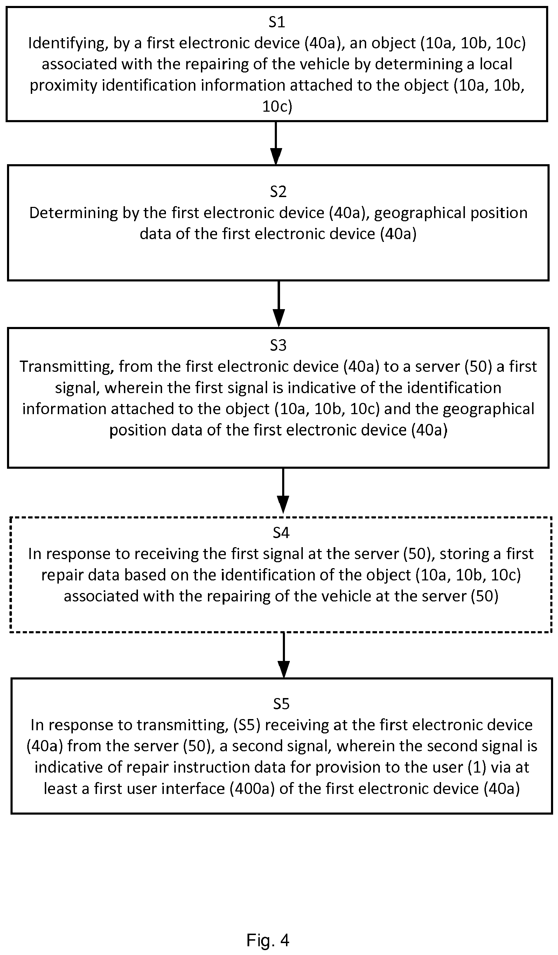

The disclosure further proposes a method for assisting a user 1 getting a vehicle repaired, that is illustrated in Fig 4. The method comprising S1 identifying, by a first electronic device 40a, an object 10a, 10b, 10c associated with the repairing of the vehicle by determining a local proximity identification information attached to the object 10a, 10b, 10c and S3 transmitting, from the first electronic device 40a to a server 50 a first signal, wherein the first signal is indicative of the identification information attached to the object 10a, 10b, 10c. The method then further comprising, in response to transmitting, S5 receiving at the first electronic device 40a from the server 50, a second signal, wherein the second signal is indicative of repair instruction data for provision to the user 1 via at least a first user interface 400a of the first electronic device 40a and/or a second user interface 400b of a second electronic device 40b. An advantage with the first electronic device, e.g. a smartphone, is that the user only needs to be in the proximity of the object, e.g. a repair kit or a tire, in order to get repair instruction data displayed on the first electronic device and/or the second electronic device, e.g. an infotainment head unit.

According to an aspect the method further comprising S2 determining by the first electronic device 40a, geographical position data of the first electronic device 40a, for determining the location of the user and the vehicle. In other words, since the first electronic device is in the proximity of the object and the vehicle, then the geographical position of the vehicle is also determined.

According to an aspect the method further comprising S4 in response to receiving the first signal at the server 50, storing a first repair data based on the identification of the object 10a, 10b, 10c associated with the repairing of the vehicle at the server 50. In other words the server can store data relating to usage of the object at a certain time.

According to an aspect the first signal is further an indicative of the geographical position data of the first electronic device 40a. This means that the geographical position data of the first electronic device 40a is also transmitted to the server 50.

According to an aspect the repair instruction data comprising an instruction video for provision of information relating to the object 10a, 10b, 10c associated with the repairing of the vehicle for provision to the user 1 via at least a first user interface 400a of the first electronic device 40a or a second user interface 400b of a second electronic device 40b. In other words an instruction video relating to the object, e.g. how to use the repair kit for repairing a flat tire, can be viewed on the first electronic device, e.g. the users smartphone, and/or the second electronic device, e.g. the infotainment head unit in the vehicle.

According to an aspect the repair instruction data comprising a suggested time at a service station for repairing the vehicle and/or directions to the location of the suggested service station for provision to the user 1 via at least a first user interface 400a of the first electronic device 40a or a second user interface 400b of a second electronic device 40b. According to an aspect the directions to a suggested service location are based on at least the g geographical position data of the first electronic device 40a. This means that the user can review a suggested time for getting the vehicle repaired, and/or get directions to the service station to see where the service station is located. According to an aspect the object 10a, 10b, 10c is a repair kit for repairing a flat tire.

The disclosure further proposes a computer program product comprising a non-transitory computer readable medium, having thereon a computer program comprising program instructions, the computer program being loadable into a processing circuitry and configured to cause execution of the method according to any of claims 10 through 14 when the computer program is run by the processing circuitry. According to an aspect the computer program is an application running on the first electronic device e.g. in the form of a smartphone or tablet.

Aspects of the disclosure will now be described with a use case. A user 1 of a vehicle 5 notice that the vehicle has a flat tire. The user opens the trunk of the vehicle and finds a repair kit labeled with a Quick Response code. The user takes out a first electronic device 40a in form of a smartphone and capture an image of the Quick Response code and receives an instruction video that is played back via the first user interface 400a of the first electronic device 40a, the smartphone. The user follows the instructions, opens the repair kit comprising a compressor and a sealant bottle, and manages to repair the flat tire with help from the instruction video. At the same time the user has received an invitation at the smartphone, to get the tire fully repaired at a service station that is just 4 km away, at 10:00-10:30 which the user accepts. The server 50 informs the local authority is about yet another flat tire at the same location.

The different aspects of the disclosure can be combined with one or more of the other different aspects. In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A first electronic device (40a) for assisting a user (1) getting a vehicle repaired, the first electronic device (40a) comprises:
• a processing circuitry (101a);
• a local proximity identification information reader (70);
wherein the processing circuitry (101a) is configured to cause the first electronic device (40a) to:
- identify an object (10a, 10b, 10c) associated with the repairing of the vehicle by determining a local proximity identification information attached to the object (10a, 10b, 10c) using the local proximity identification information reader (70a, 70b);
- determine geographical position data of the first electronic device (40a);
- transmit, to a server (50), a first signal, wherein the first signal is indicative of the identification information attached to the object (10a, 10b, 10c) and the geographical position data of the first electronic device (40a); and
- receive, from the server (50), a second signal, wherein the second signal is indicative of repair instruction data for provision to the user (1) via at least a first user interface (400a) of the first electronic device (40a).

2. The first electronic device (40a) according to claim 1, wherein the second signal is indicative of repair instruction data for provision to the user (1) via at least a first user interface (400a) of the first electronic device (40a) and/or a second user interface (400b) of a second electronic device (40b).

3. The first electronic device (40a) according to any of the preceding claims, wherein the repair instruction data comprising an instruction video for provision of information relating to the object (10a, 10b, 10c) associated with the repairing of the vehicle to the user (1) via at least a first user interface (400a) of the first electronic device (40a) or a second user interface (400b) of the second electronic device (40b).

4. The first electronic device (40a) according to any of the preceding claims, wherein the repair instruction data comprising a suggested time slot at a service station for repairing the vehicle and/or directions to the location of the suggested service station.

5. The first electronic device (40a) according to any of the preceding claims, wherein the repair instruction data comprising directions to the location of the suggested service station based on at least the geographical data of the first electronic device (40a) or the object (10a, 10b, 10c) associated with the repairing of the vehicle.

6. The first electronic device (40a) according to any of the preceding claims, wherein the local proximity identification information reader (70a, 70b) comprises at least one of:
- a camera (70a) for determining the local proximity identification information by capturing an image of a Quick Response code;
- a radio (70b) for determining the local proximity identification information via Radio Frequency Identification technology or Near Field Communication technology.

7. A server (50) for assisting a user (1) getting a vehicle repaired, the server (50) comprises:
• a processing circuitry (101c);
wherein the processing circuitry (101c) is configured to cause server (50) to:
- receive, from a first electronic device (40a), a first signal, wherein the first signal is indicative of an identification information attached to an object (10a, 10b, 10c) associated with the repairing of the vehicle and geographical position data of the first electronic device (40a);
- determine, based on the received first signal, a repair instruction data;
- transmit, to the first electronic device (40a), a second signal, wherein the second signal is indicative of repair instruction data for provision to the user (1) via at least a first user interface (400a) of the first electronic device (40a).

8. The server (50) according to claim 7, wherein the processing circuitry (101c) is further configured to cause the server (50) to:
- store a first repair data based on the identification of the object (10a, 10b, 10c) associated with the repairing of the vehicle.

9. The server (50) according to claim 7 or claim 8 wherein the second signal is indicative of repair instruction data for provision to the user (1) via at least a first user interface (400a) of the first electronic device (40a) and/or a second user interface (400b) of a second electronic device (40b).

10. A method for assisting a user (1) getting a vehicle repaired, the method comprising:
- (S1) identifying, by a first electronic device (40a), an object (10a, 10b, 10c) associated with the repairing of the vehicle by determining a local proximity identification information attached to the object (10a, 10b, 10c);
- (S2) determining by the first electronic device (40a), geographical position data of the first electronic device (40a);
- (S3) transmitting, from the first electronic device (40a) to a server (50) a first signal, wherein the first signal is indicative of the identification information attached to the object (10a, 10b, 10c) and the geographical position data of the first electronic device (40a);
- in response to transmitting, (S5) receiving at the first electronic device (40a) from the server (50), a second signal, wherein the second signal is indicative of repair instruction data for provision to the user (1) via at least a first user interface (400a) of the first electronic device (40a).

11. The method according to claim 10 wherein the second signal is indicative of repair instruction data for provision to the user (1) via at least a first user interface (400a) of the first electronic device (40a) and/or a second user interface (400b) of a second electronic device (40b).

12. The method according to claim 10 or 11 further comprising:
- (S4) in response to receiving the first signal at the server (50), storing a first repair data based on the identification of the object (10a, 10b, 10c) associated with the repairing of the vehicle at the server (50).

13. The method according to any of the claims 10 to 12 wherein the repair instruction data comprising an instruction video for provision of information relating to the object (10a, 10b, 10c) associated with the repairing of the vehicle for provision to the user (1) via at least a first user interface (400a) of the first electronic device (40a) or a second user interface (400b) of a second electronic device (40b).

14. The method according to any of the claims 10 to 13 wherein the repair instruction data comprising a suggested time at a service station for repairing the vehicle and/or directions to the location of the suggested service station for provision to the user (1) via at least a first user interface (400a) of the first electronic device (40a) or a second user interface (400b) of a second electronic device (40b).

15. A computer program product comprising a non-transitory computer readable medium, having thereon a computer program comprising program instructions, the computer program being loadable into a processing circuitry and configured to cause execution of the method according to any of claims 10 through 14 when the computer program is run by the processing circuitry.
